(19) Europäisches Patentamt
European Patent Office
Office européen des brevets

(11) Publication number: **0 113 984**
**B1**

(12) # EUROPEAN PATENT SPECIFICATION

(45) Date of publication of patent specification: **01.04.87**

(51) Int. Cl.$^4$: **H 04 N 5/232,** G 02 B 7/11, G 03 B 3/10

(21) Application number: **83307683.9**

(22) Date of filing: **16.12.83**

(54) **Portable video camera with automatic focusing device.**

(30) Priority: **17.12.82 JP 190902/82 u**

(43) Date of publication of application:
**25.07.84 Bulletin 84/30**

(45) Publication of the grant of the patent:
**01.04.87 Bulletin 87/14**

(84) Designated Contracting States:
**DE FR GB NL**

(56) References cited:
**DE-A-2 526 612**
**GB-A-2 095 505**
**US-A-4 150 888**

(73) Proprietor: **SONY CORPORATION**
**7-35 Kitashinagawa 6-Chome Shinagawa-ku**
**Tokyo 141 (JP)**

(72) Inventor: **Inaga, Inaga**
**1-11-4, Kitakarasuyama**
**Setagaya-ku Tokyo (JP)**
Inventor: **Uda, Nobuo**
**Mikoma-so, 2-12-14 Nigashiizumi**
**Komae-shi Tokyo (JP)**
Inventor: **Inoue, Tatsuo**
**7158-4, Midorimachi 3-chome**
**Fuchu-shi Tokyo (JP)**

(74) Representative: **Ayers, Martyn Lewis Stanley et al**
**J.A. KEMP & CO. 14 South Square Gray's Inn**
**London, WC1R 5EU (GB)**

**EP 0 113 984 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a video camera with an automatic focus adjusting mechanism, which effects automatic focus adjustment of an image focusing optical system for focusing an image of an object on an image pick-up plane by emitting measuring light from a light emitting section and measuring the distance of the object from a lens by detecting the measuring light reflected by the object in a light receiving section, and more particularly to a portable video camera with a handgrip for carrying it.

There have been proposed video cameras with an automatic focus adjusting mechanism for automatically adjusting the focus of an image pick-up lens by measuring the distance between the video camera body and an object to be picked up. The automatic focus adjusting mechanism drives an image pick-up lens focusing mechanism according to distance information obtained in a distance measuring section which is usually based on a light objection system under the principles of the triangular surveying or a twofold image coincidence system.

With the distance measuring section operating on the triangulation principle, it is necessary to provide a long base line in order to provide for sufficient precision of measurement. In addition, the optical axis of the distance measuring system and the optical axis of the image pick-up system must coincide with each other. Otherwise, problems arise with parallax.

Portable video cameras include those of popular hand held and shouldered type, which comprise a small size and light weight video camera body with a handgrip attached thereto for carrying it from the considerations of the handling property and operability.

Figure 1 of the accompanying drawings is a perspective view of a well-known video camera of shouldered type with an automatic focus adjusting mechanism.

The prior art video camera shown in Figure 1 comprises a camera body 1, which is secured to a shouldering frame 2. The user may take pictures using this camera in a stable posture by shouldering a shouldering section 3 of the frame 2 and gripping a handgrip 4 projecting from the front of the frame 2.

The camera body 1 has a cylindrical lens holder 7 projecting from the front and supporting an image pick-up lens 6. The cylindrical lens holder 7 also supports a focus adjusting ring 8, which permits focus adjustment by the operation of an automatic focus adjusting mechanism not shown, which is accommodated in a housing 9 provided under the lens holder 7, or by manual operation. The housing 9 has two distance measurement windows or apertures 11 and 12 formed on the front. As shown in Figure 2, light from an object, which is incident from the windows 11, 12 respectively, is focused on a CCD line sensor 18 through reflecting mirrors 13 and 14, image focusing lenses 15 and 16 and a reflecting prism 17. The light from an object being incident through the window 11 is focused to form a reference image focused on the CCD line sensor 18 at a predetermined position thereof, while the light from an object being incident through the other window 12 forms a movable image on the CCD line sensor 18, which movable image is movable along the CCD line sensor 18 according to the distance of the object. The reference and movable images focused on the CCD line sensor 18 are used to calculate the distance of the object so as to control a focusing motor for automatic focus adjustment.

In the usual video camera with an automatic focus adjusting mechanism, erroneous operation thereof is liable to result in the case of an object which is out of a distance range (i.e., image angle range) measurable by the automatic focus adjusting mechanism or of a low contrast object or in the case of a scene where background and foreground scenes coexist. For this reason, provision is made to adjust the focus manually as well. In the prior art video camera of the structure shown in Figure 1 as described, however, the housing 9 of the automatic focus adjusting mechanism provided under the lens holder 7 of the image pick-up lens 6 obstructs the manual operation of the focus adjusting ring 8, so that the operability is very inferior. Besides, parallax occurs due to failure of coincidence of the optical axes of the distance measuring system and image pick-up system (having these axes coincident is per se known e.g. from US—A—4 150 888 and GB—2 095 505, although not in the type of camera to which the invention relates). Furthermore, it is impossible to provide a long reference line for triangular light measurement, so that the precision of distance measurement is low.

According to the present invention, there is provided a portable video camera with image pick-up device comprising:

(a) a body having a grip attached thereto;

(b) a focus adjustable lens means attached to the front of said body and capable of focus adjustment with respect to an object whose picture is to be taken;

(c) adjusting means for adjusting the focus of said lens means;

(d) a light emitting device for emitting measuring light to said object;

(e) a light receiving device for receiving the measuring light reflected by said object and generating a signal corresponding to the distance between said lens means and said object; and

(f) means for supplying said signal to said adjusting means characterised in that said light emitting device, light receiving device and supplying means are arranged in said grip, which is attached to one side of the camera body, such that either the axis of the emitted measuring beam from said light emitting device or the axis of the measuring light reflected from said object to said light receiving device coincides with the optical axis of said lens means.

As will become apparent from the following the present invention can provide a portable video camera, with which automatic focus adjustment can be obtained through precise detection of the position of an object without any parallax being introduced in the distance measurement, using the triangular surveying principle. The illustrated embodiment provides for size reduction of the portable video camera, which is capable of both automatic focus adjustment and manual focus adjustment, and also improvement of the operability of the camera when effecting manual focus adjustment.

The above and further features of the invention will become more apparent from the following detailed description when the same is read with reference to the accompanying drawings illustrating a preferred embodiment of the invention. In the drawings:—

Figure 1 is a perspective view showing a prior art video camera;

Figure 2 is a schematic view for explaining the principles of the distance measurement in the prior art video camera;

Figure 3 is a perspective view showing an embodiment of the video camera according to the present invention;

Figure 4 is a block diagram showing the structure of an automatic focus adjusting mechanism in the illustrated embodiment of the present invention; and

Figure 5 is a schematic view for explaining the principles of the distance measurement in the embodiment of the present invention.

Referring to Figure 3, there is shown a perspective view of an embodiment of the present invention applied to a video camera of a shouldered type. The video camera comprises a camera body 21 with a shouldering section 22 provided at the bottom. A cylindrical lens holder 24 supporting an image pick-up lens 23 accommodated in it projects from the camera body 21. It has a grip 25 provided on one side (i.e., right side in this embodiment) of the outer periphery. The user may take pictures using this video camera in a stable posture by shouldering the shouldering section 22 of the camera body 21 on the right shoulder and gripping the grip 25 with the right hand.

In this embodiment of video camera, an automatic focus adjusting mechanism is accommodated in the grip 25. The grip 25 has a button 26 provided at its top 25A, for operating a drive switch for the automatic focus adjusting mechanism. It also has a light receiving window 27 for distant measurement provided at the front 25B of upper side of the grip 25.

Numeral 28 in Figure 3 designates a knob for manually operating a focus adjusting ring 29 for the image pick-up lens 23. With this embodiment of video camera, with the automatic focus adjusting mechanism held inoperative, the focus adjustment can be manually adjusted by operating the knob 28.

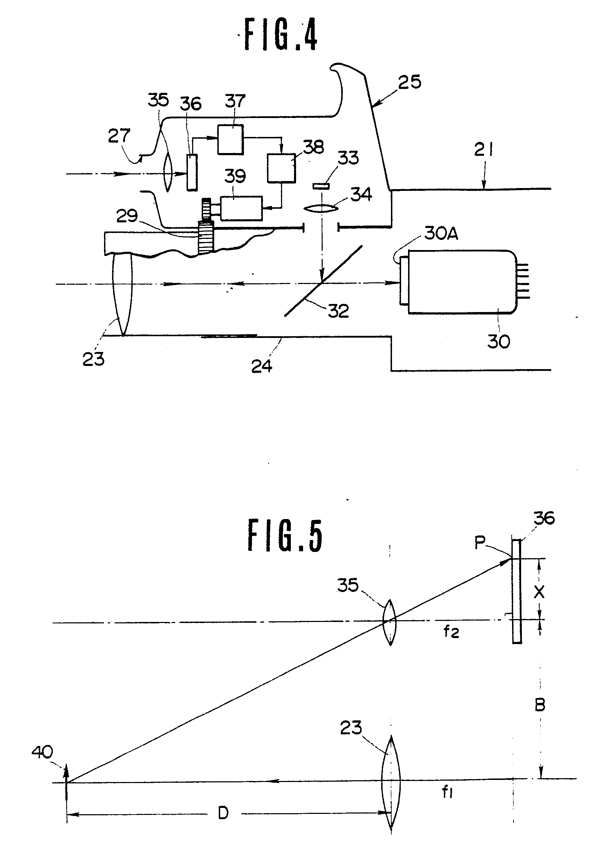

As shown in Figure 4, in this embodiment the cylindrical lens holder 24 supporting the image pick-up lens 23 also accommodates a beam splitter 32, which is located on the optical axis of the image pick-up lens 23, i.e., the optical axis of the image pick-up system for focusing the image of the object on an image pick-up surface 30A of an image pick-up section provided in the camera body 21. The grip 25 accommodates a light emitting section 33, for instance an infrared radiation emitting diode. The light emitting section 33 can emit measuring light, which is directed to the beam splitter 32 in the lens holder 24 through a collimate lens 34 and thence directed to an object 40 to be picked up along the optical axis of the image pick-up optical system through the beam splitter 32. The measuring light reflected by the object 40 is led into the interior of the grip 25 through the light receiving window 27 provided thereon for distance measurement, and is incident on a light receiving section 36, for instance a silicon photodiode or the like, through a condenser lens 35.

Referring to the schematic view of Figure 5, the focal distance of the image pick-up lens 23 is indicated at $f_1$, the focal distance of the condenser lens 35 is indicated at $f_2$, and the distance between the axes of the image pick-up lens 23 and condenser lens 35 is indicated at B. The position P, at which the measuring light is incident on the light receiving section 36, varies corresponding to the distance D of the object 40. For the varying displacement x of the position P, there holds the relation

$$D:B=f_2:x.$$

That is,

$$D=\frac{B \cdot f_2}{x} \tag{1}$$

The equation (1) represents the distance D from the object 40.

A distance measuring circuit 37 calculates the distance D from the object 40 using the equation (1) with the position P of incidence of measuring light on the light receiving section 36 as distance information. It is to be understood that in this embodiment the distance D is measured under the principles of the triangular surveying. According to the measurement data obtained from the distance measuring circuit 37 a motor drive circuit 38 drives a focusing motor 39 to cause rotation of the focus adjusting ring 29 so as to control the focal distance $f_1$ of the image pick-up optical system for automatic focus adjustment.

In this embodiment having the above construction, the measuring light emitted is directed to proceed along the optical axis of the image pick-up optical system through the beam splitter 32 provided in the lens holder 24. Thus, the object 40 can be picked up accurately and without any distance measurement parallax. Further, since the measuring light is led into the interior of the grip 25 through the light receiving window 27 for the distance measurement provided at the grip 25 and thence incident on the light receiving section 36 through the condenser lens 35, the distance B between the axes of the image pick-up lens 23 and the condenser lens 35, i.e., the length of reference line segment in the triangular surveying, can be made sufficiently large to obtain high precise measurement of the distance D from the object 40 under the principles of the triangular surveying. Further, since the automatic focus adjusting mechanism is accommodated in the grip 25, the size of the video camera can be reduced, and also the case of manually operating the focus adjusting ring 29 for the image pick-up lens 23 can be improved. The light emitting and receiving sections 33 and 36 may be interchanged in their dispositions in the above embodiment.

**Claims**

1. A portable video camera with image pick-up device comprising: (a) a body having a grip (25) attached thereto;

(b) a focus adjustable lens means (23) attached to the front of said body and capable of focus adjustment with respect to an object whose picture is to be taken;

(c) adjusting means (39, 29) for adjusting the focus of said lens means;

(d) a light emitting device (33) for emitting measuring light to said object;

(e) a light receiving device (36) for receiving the measuring light reflected by said object and generating a signal corresponding to the distance between said lens means and said object; and

(f) means (37, 38) for supplying said signal to said adjusting means characterised in that

said light emitting device (33), light receiving device (36) and supplying means (37, 38) are arranged in said grip, which is attached to one side of the camera body, such that either the axis of the emitted measuring beam from said light emitting device (33) or the axis of the measuring light reflected from said object to said light receiving device (36) coincides with the optical axis of said lens means (23).

2. A portable video camera with image pick-up device according to claim 1, wherein either light from said light emitting device or light to said light receiving device is separated from the light to said image pick-up device by a beam splitter (32).

3. A portable video camera with image pick-up device according to claim 1 or 2, wherein said adjusting means includes a motor (39) and a focus adjusting ring (29) driven by said motor.

**Patentansprüche**

1. Tragbare Videokamera mit einer Bildaufnahmeeinrichtung, mit

(a) einem Körper, der einen Griff (25) hat, welcher an dem Körper angebracht ist,

(b) einer einstellbaren Fokussierungslinse (23), die an der Vorderseite des Körpers angebracht und in bezug auf ein Objekt, dessen Bild aufzunehmen ist, zum Zwecke einer Fokussierung einstellbar ist,

(c) Einstellmitteln (39, 29) zum Einstellen des Fokus der Fokussierungslinse,

(d) einer lichtemittierenden Einrichtung (33) zum Emittieren von Meßlicht in Richtung auf das Objekt,

(e) einer lichtempfangenden Einrichtung (36) zum Empfangen des Meßlichts, das durch das Objekt relflektiert wird, und zum Erzeugen eines Signals, das mit dem Abstand zwischen der Fokussierungslinse und dem Objekt korrespondiert, und

(f) Mitteln (37, 38) zum Zuführen des Signals zu den Einstellmitteln,

dadurch gekennzeichnet, daß die lichtemittierende Einrichtung (33), die lichtempfangende Einrichtung (36) und die Mittel (37, 38) zum Zuführen in dem Griff angeordnet sind, der derart an einer Seite des Kamerakörpers angebracht ist, daß entweder die Achse des emittierten Meßlichtstrahls aus der lichtemittierenden Einrichtung (33) oder die Achse des Meßlichtstrahls, der von dem Objekt in Richtung auf die lichtempfangende Einrichtung (36) reflektiert wird, mit der optischen Achse der Fokussierungslinse (23) zusammenfällt.

2. Tragbare Videokamera mit einer Bildaufnahmeeinrichtung nach Anspruch 1, bei der entweder Licht aus der lichtemittierenden Einrichtung oder Licht, das auf die lichtempfangende Einrichtung trifft, von dem Licht, das auf die Bildaufnahmeeinrichtung trifft, durch einen Strahlteiler (32) getrennt wird.

3. Tragbare Videokamera mit einer Bildaufnahmeeinrichtung nach Anspruch 1 oder 2, bei der die Einstellmittel aus einem Motor (39) und einem Fokuseinstellring (29), der durch den Motor angetrieben wird, bestehen.

**Revendications**

1. Caméra vidéo portative avec un dispositif de prise de vues comportant:

(a) un corps sur lequel est fixée une poignée (25);

(b) un objectif de focalisation réglable (23) fixé à l'avant dudit corps et permettant un réglage de mise au point par rapport à un objet dont l'image doit être prise;

(c) un dispositif de réglage (29, 39) pour régler la focalisation dudit objectif,

(d) un dispositif d'émission de lumière (33) qui émet de la lumière de mesure vers ledit objet;

(e) un dispositif de réception de lumière (36) qui reçoit la lumière de mesure réfléchie par ledit objet et produisant un signal correspondant à la distance entre ledit objectif et ledit objet;

(f) un dispositif (37, 38) qui applique ledit signal audit dispositif de réglage, caractérisé en ce que:

ledit dispositif d'émission de lumière (33), ledit dispositif de réception de lumière (36) et ledit dispositif d'application (37, 38) sont disposés dans ladite poignée qui est fixée sur un côté du corps de caméra de manière que l'axe du faisceau de mesure émis par ledit dispositif d'émission de lumière (33) ou l'axe de la lumière de mesure réfléchie par ledit objet vers ledit dispositif de réception de lumière (36) coïncide avec l'axe optique dudit objectif (23).

2. Caméra vidéo portative avec un dispositif de prise de vues selon la revendication 1, dans lequel la lumière provenant dudit dispositif d'émission de lumière ou la lumière vers ledit dispositif de réception de lumière est séparée de la lumière vers ledit dispositif de prise de vues par un séparateur de faisceau (32).

3. Caméra vidéo portative avec un dispositif de prise de vues selon la revendication 1 ou 2, dans lequel ledit dispositif de réglage comporte un moteur (39) et une bague de mise au point (29) entrainée par ledit moteur.

FIG.1

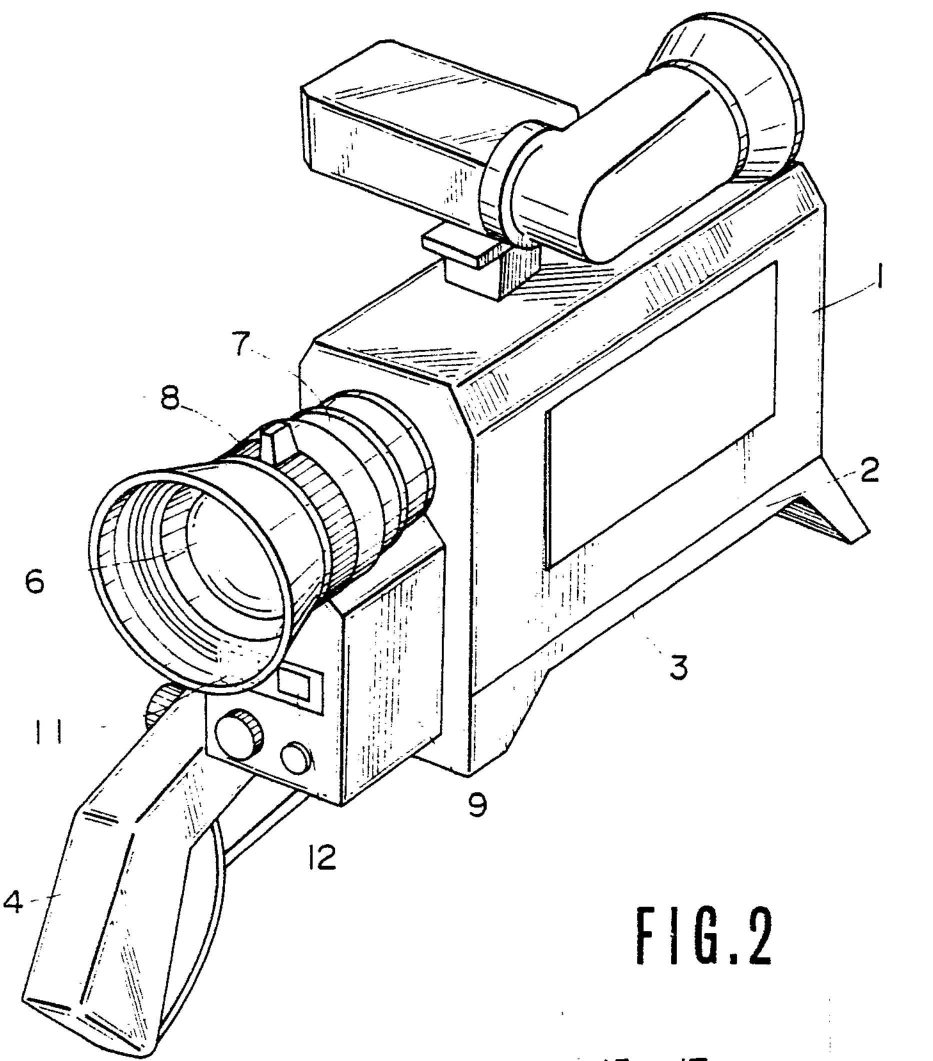


FIG.2

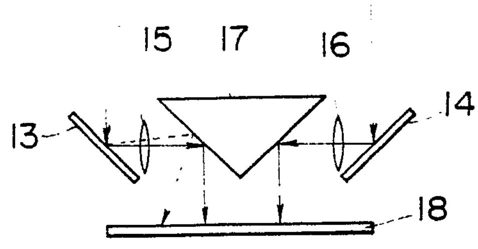

FIG.3

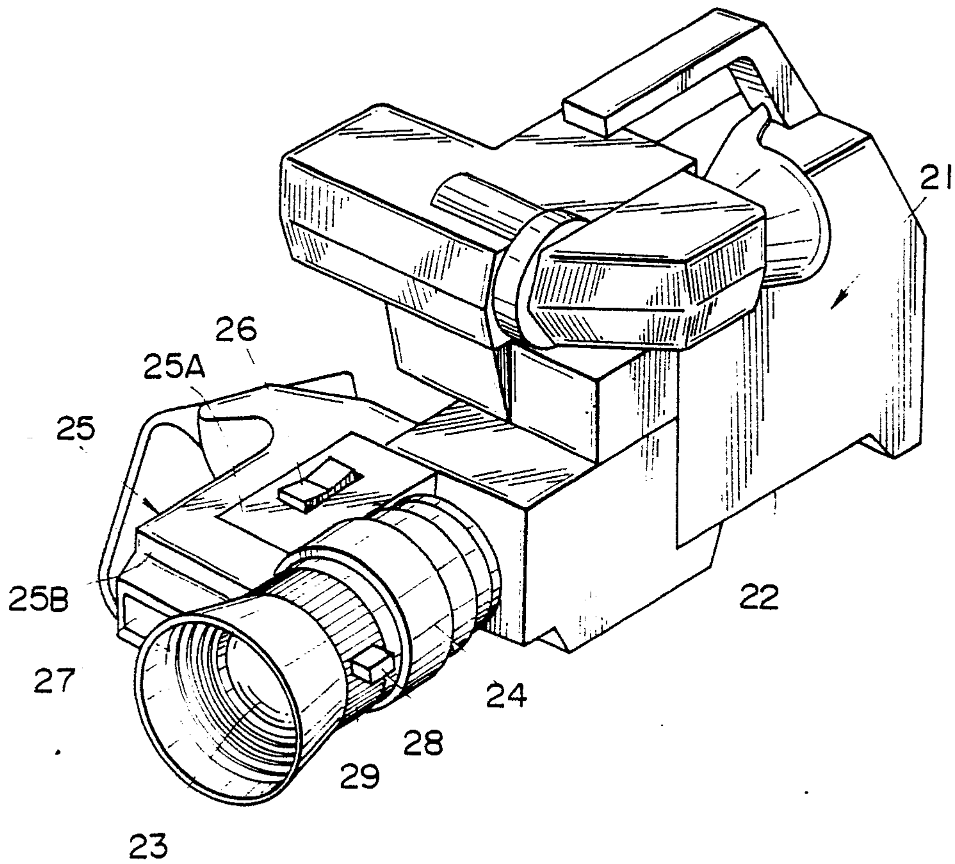

FIG.4

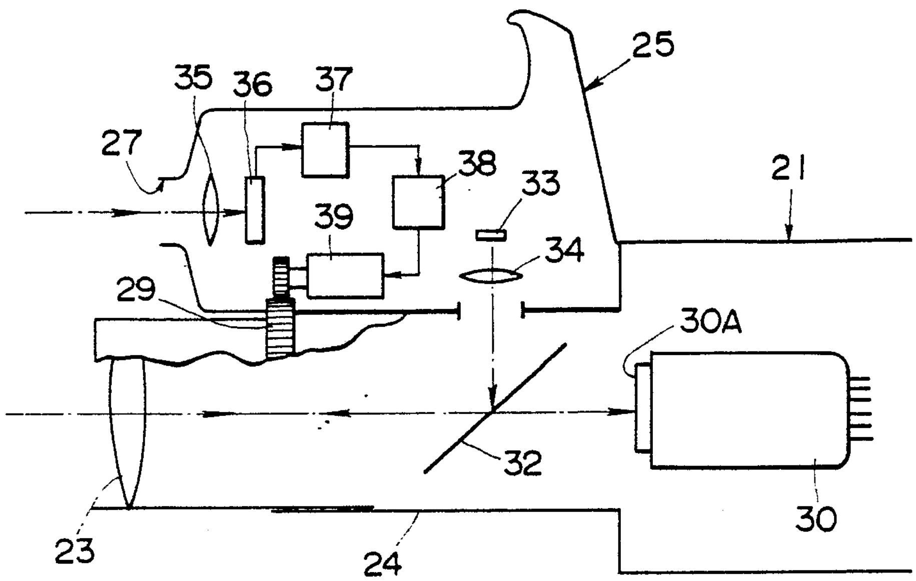


FIG.5